# EUROPEAN PATENT APPLICATION

(11) **EP 2 381 641 A1**
(43) Date of publication of application: **26.10.2011**
(21) Application number: 10764103.7
(22) Date of filing: 15.04.2010
(51) Int. Cl.: H04L 29/06

(54) **PROGRAM RECOMMENDATION METHOD, TERMINAL EQUIPMENT AND NETWORK SYSTEM**

(30) Priority: 15.04.2009 CN 200910134942
(71) Applicant: Huawei Technologies Co., Ltd., Shenzhen, Guangdong 518129 (CN)
(72) Inventor: SHI, Teng, Shenzhen Guangdong 518129 (CN); ZHANG, Yuanyuan, Shenzhen Guangdong 518129 (CN); TIAN, Yonghui, Shenzhen Guangdong 518129 (CN); YUE, Peiyu, Shenzhen Guangdong 518129 (CN); LIU, Guangyuan, Shenzhen Guangdong 518129 (CN); ZHANG, Chuxiong, Shenzhen Guangdong 518129 (CN); YUAN, Weizhong, Shenzhen Guangdong 518129 (CN)
(74) Representative: Epping - Hermann - Fischer
(86) International application number: PCT/CN2010/071786
(87) International publication number: WO 2010/118690

(57) **Abstract**

A program recommendation method, a terminal device, and a network system are provided. The program recommendation method includes the following steps. A terminal of a recommendation receiver receives a recommendation message sent by a terminal of a recommendation originator. The recommendation message includes a program identity (ID) and an ID of a part of program stream recommended by the recommendation originator. An instruction message for instructing a media function (MF) server to deliver the part of program stream of the program is sent according to the program ID and the ID of the part of program stream. The part of program stream delivered by the MF is received. Therefore, recommendation of an important part in the program stream can be realized.

## Description

### FIELD OF THE TECHNOLOGY

The present invention relates to the field of communication technology, and more particularly to a program recommendation method, a terminal device, and a network system.

### BACKGROUND OF THE INVENTION

Nowadays, an Internet protocol television (IPTV) service and a communication service are merged to generate some value-added services, for example, the Amigo TV The Amigo TV is a value-added service in which a user who is watching an IPTV program can invite other users to watch the TV program together through the network. The Amigo TV is not only applicable in the IPTV but also applicable in TV services of personal computers (PCs) and mobile terminals.

When a user (a recommendation originator) recommends a program to a friend (a recommendation receiver), a terminal of the user (the recommendation originator) sends a recommendation message to a terminal of the friend (the recommendation receiver). The recommendation message includes an identity (ID) of the program. The terminal of the friend sends a playing request to a media function (MF) server according to the ID of the program. The MF server delivers the program stream to the terminal of the friend.

The prior art has the following disadvantages.

In the prior art, the terminal of the friend receives the program stream delivered by the MF and the program stream can only be played to the friend from beginning to end and the friend can also only watch the recommended program from beginning to end, causing a bad user experience.

### SUMMARY OF THE INVENTION

Embodiments of the present invention provide a program recommendation method, a terminal device, and a network system, so as to realize recommendation of important parts of program streams.

In view of this, the present invention provides a program recommendation method, where the method includes the following steps.

A terminal of a recommendation receiver receives a recommendation message sent by a terminal of a recommendation originator. The recommendation message includes a program ID and an ID of a part of program stream recommended by the recommendation originator.

An instruction message for instructing a media function (MF) server to deliver the part of program stream of the program is sent according to the program ID and the ID of the part of program stream.

The part of program stream delivered by the MF server is received.

The present invention provides a program recommendation method, where the method includes the following steps.

A terminal of a recommendation receiver receives a recommendation message sent by a terminal of a recommendation originator. The recommendation message includes a program ID and range information of a part of image recommended by the recommendation originator.

Display mode information of the part of image is obtained.

An instruction message for instructing an MF server to deliver a program stream is sent according to the program ID.

The program stream delivered by the MF server is received and the program stream is played according to the range information of the part of image and the display mode information of the part of image.

The present invention provides a terminal device , where the terminal device includes a message receiving unit, a message sending unit, and a program-stream receiving unit.

The message receiving unit is configured to receive a recommendation message. The recommendation message includes a program ID and an ID of a part of program stream recommended by a recommendation originator.

The message sending unit is configured to send an instruction message for instructing an MF server to deliver a part of program stream of the program according to the program ID and the ID of the part of program stream.

The program-stream receiving unit is configured to receive the part of program stream delivered by the MF server.

The present invention provides a terminal device , where the terminal device a message receiving unit, an obtaining unit, a message sending unit, a program-stream receiving unit, and a playing unit.

The message receiving unit is configured to receive a recommendation message. The recommendation message includes a program ID and range information of a part of image recommended by a recommendation originator.

The obtaining unit is configured to obtain display mode information of the part of image after receiving the recommendation message.

The message sending unit is configured to send an instruction message for instructing an MF server to deliver a program stream according to the program ID.

The program-stream receiving unit is configured to receive the program stream delivered by the MF server.

The playing unit is configured to play the program stream according to the range information of the part of image and the display mode information of the part of image.

The present invention provides a network system includes a terminal of a recommendation originator and a terminal of a recommendation receiver.

The terminal of the recommendation originator is configured to receive a recommendation condition including recommendation instruction information of a part of program stream, and send a recommendation message to the terminal of the recommendation receiver according to the recommendation condition. The recommendation message includes a program ID and an ID of the part of program stream recommended by the recommendation originator.

The terminal of the recommendation receiver is configured to receive the recommendation message sent by the terminal of the recommendation originator and send an instruction message for instructing an MF server to deliver the a part of program stream of the program according to the program ID and the ID of the part of program stream, and receive the part of program stream delivered by the MF server.

The present invention provides a network system, where the network system includes a terminal of a recommendation originator and a terminal of a recommendation receiver.

The terminal of the recommendation originator is configured to receive a recommendation condition including range instruction information of a part of image, and send a recommendation message to the terminal of the recommendation receiver according to the recommendation condition. The recommendation message includes a program ID and range information of the part of image recommended by the recommendation originator.

The terminal of the recommendation receiver is configured to receive the recommendation message sent by the recommendation originator of the terminal, obtain display mode information of the part of image, send an instruction message for instructing an MF server to deliver the program stream according to the program ID, receive the program stream delivered by the MF server, and play the program stream according to the range information of the part of image and the display mode information the part of image.

In an embodiment of the present invention, the terminal of the recommendation receiver instructs the MF server to deliver a part of program stream only according to the ID of the received part of program stream, so as to achieve an objective of recommendation of a part of program stream, and at the same time, as the MF server only needs to deliver a part of program stream, resources such as network bandwidth can be saved.

In another embodiment of the present invention, the terminal of the recommendation receiver plays the program stream received from the MF server according to the range information of the part of image and the display mode information of the part of image, so as to achieve an objective of recommendation of important images in the program stream.

### BRIEF DESCRIPTION OF THE DRAWINGS

Figure 1 is a flow chart of a program recommendation method according to a first embodiment of the present invention;
Figure 2 is a flow chart of a program recommendation method according to a second embodiment of the present invention;
Figure 3 is a flow chart of a program recommendation method according to a third embodiment of the present invention;
Figure 4 is a flow chart of a program recommendation method according to of a fourth embodiment of the present invention;
Figure 5 is a flow chart of a program recommendation method according to of a fifth embodiment of the present invention;
Figure 6 is a structural view of a terminal device according to a sixth embodiment of the present invention;
Figure 7 is a structural view of a terminal device according to a seventh embodiment of the present invention; and
Figure 8 is a structural view of a network system according to an eighth embodiment of the present invention.

### DETAILED DESCRIPTION OF THE EMBODIMENTS

### Embodiment 1

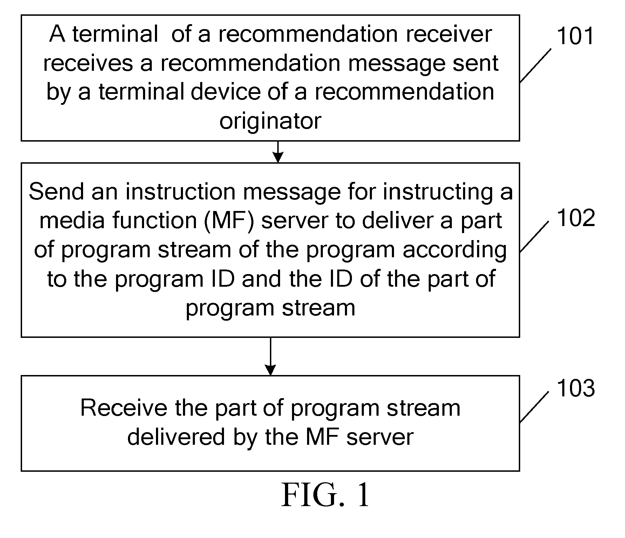

FIG 1 shows a program recommendation method according to a first embodiment of the present invention, which includes the followings steps.

In step 101, a terminal of a recommendation receiver receives a recommendation message sent by a terminal of a recommendation originator. The recommendation message includes a program ID and an ID of a part of program stream recommended by the recommendation originator.

In step 102, an instruction message for instructing a media function (MF) server to deliver the part of program stream of the program is sent according to the program ID and the ID of the part of program stream.

In step 103, the part of program stream delivered by the MF is received.

The instruction message may include a session negotiation request message in the following second embodiment. The session negotiation request message only includes transmission channel information of the part of program stream.

The program ID may be address information of the program.

According to the first embodiment of the present invention, the terminal of the recommendation receiver instructs the MF server to deliver only a part of program stream according to the received ID of the part of program stream, so as to realize recommendation of the part of program stream, and at the same time, as the MF server only needs to deliver the part of program stream, resource such as the network bandwidth may be saved.

### Embodiment 2

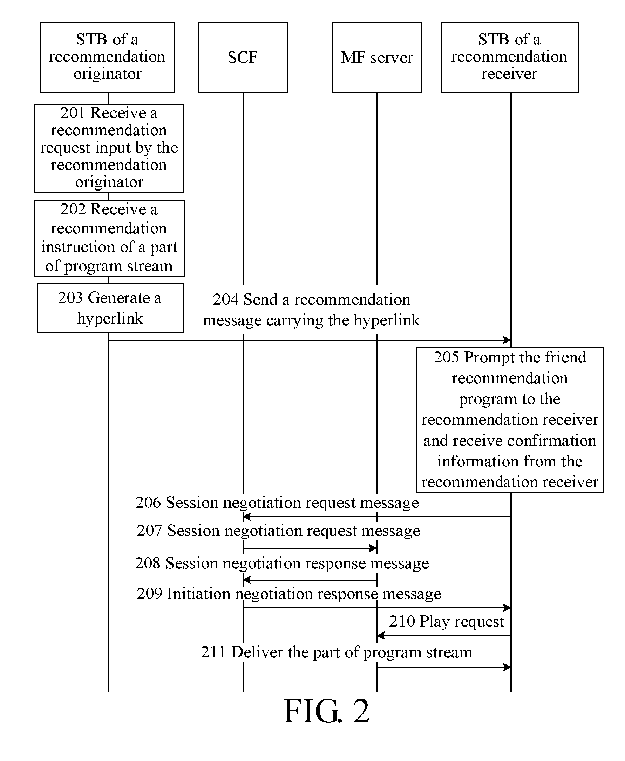

FIG 2 shows a program recommendation method according to a second embodiment of the present invention, which includes the following steps.

In step 201, a set top box (STB) of a recommendation originator receives a recommendation request inputted by the recommendation originator, and provides a recommendation operation interface for the recommendation originator.

The step is applicable in the following scenario. The recommendation originator finds that an original sound track of a movie is very good to use as listening materials and intends to recommend the sound track to a friend (a recommendation receiver). The recommendation originator can select a "recommend" button in a menu by using a remote. At this time, the STB of the recommendation originator receives the recommendation request of the recommendation originator and displays a recommendation operation interface.

In step 202, the STB of the recommendation originator receives a recommendation condition inputted at the operation interface by the recommendation originator, and receives information of the recommendation receiver. The recommendation condition includes recommendation instruction information of a part of program stream.

Continuing with the foregoing example, the recommendation originator selects a "recommend audio only" item in a drop-down menu in the recommendation operation interface and selects a recommendation object (that is, the recommendation receiver) in a friend list. At this time, the STB of the recommendation originator receives the recommendation condition of the "recommend audio only" and receives information of the recommendation receiver.

The recommendation originator may also input the recommendation condition in the recommendation operation interface manually and the implementation of the present invention is not influenced.

In step 203, the STB of the recommendation originator generates, according to the recommendation instruction information of the part of program stream and the ID of the current program, a hyperlink. A form of the hyperlink can be as follows:
IPTV://CoDServer/movie1/ep22?streamID=audio1.

The part IPTV://CoDServer/movie1/ep22 is a demand address of the program, the audio1 is an ID of the audio stream, and the ?streamID=audio1 identifies that only the audio stream is recommended.

In step 204, the STB of the recommendation originator sends a recommendation message carrying the hyperlink to an STB of the recommendation receiver. The recommendation message can be a session initiation protocol (SIP) message. A format of the SIP message can be as follows:
MESSAGE sip:xiaoxue@domain.com SIP/2.0
Via: SIP/2.0/TCP Potianpc.domain.com;branch=z9hG4bK776sgdkse
Max-Forwards: 70
From: sip:Potian@domain.com;tag=49583
To: sip:xiaoxue@domain.com
Call-ID: asd88asd77a@1.2.3.4
CSeq: 1 MESSAGE
Content-Type: text/plain ; application-type= content sharing
Content-Length: 50
IPTV://CoDServer/moviel1/ep22? streamID=audio1.

The recommendation message in step 204 can also be other messages instead of the SIP message, for example, a short messaging service (SMS), and the implementation of the present invention is not influenced.

In step 205, after receiving the recommendation message, the STB of the recommendation receiver prompts the recommendation message to the recommendation receiver. For example, the recommendation receiver can be prompted that "Your friend ** recommends a part of media stream (for example, an audio stream) of a program to you. Receive it or not?" The STB of the recommendation receiver receives confirmation information of the prompt from the recommendation receiver.

In step 206, the STB of the recommendation receiver initiates a session negotiation request message only including transmission channel information of an audio stream to a service control function (SCF) according to the recommendation message.

In step 207, the SCF sends the session negotiation request message to the MF server.

In step 208, after receiving the session negotiation request message, the MF server sends a session negotiation response message to the SCF.

In step 209, the SCF sends the session negotiation response message to the STB of the recommendation receiver.

In step 210, the STB of the recommendation receiver sends a playing request to the MF.

In step 211, the MF server delivers the part of program stream to the STB of the recommendation receiver, and the STB of the recommendation receiver plays the part of program stream.

In the embodiment, the recommendation originator can also specify a certain time period of the part of program stream. At this time, in step 202, the STB of the recommendation originator receives time period instruction information input by the recommendation originator. Correspondingly, the hyperlink generated in step 203 includes the time period instruction information, and therefore in step 211 the MF server delivers a part of media stream within the time period, for example, the audio stream within the time period.

According to the second embodiment of the present invention, the STB of the recommendation originator sends the ID of the part of program stream to the STB of the recommendation receiver. The STB of the recommendation receiver only needs to negotiate the part of program stream with the MF server and receives the part of program stream delivered by the MF server, so as to achieve the objective of recommend the part of program stream. At the same time, as the MF only needs to deliver a part of program stream, resource such as network bandwidth can be saved.

### Embodiment 3

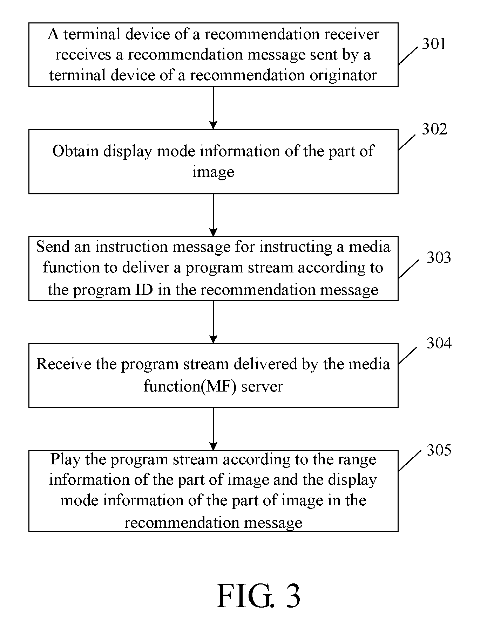

FIG 3 shows a program recommendation method according to a third embodiment of the present invention, which includes the following steps.

In step 301, a terminal of a recommendation receiver receives a recommendation message sent by a terminal of a recommendation originator. The recommendation message includes a program ID and range information of a part of image recommended by the recommendation originator.

In step 302, display mode information of the part of image is obtained.

In step 303, an instruction message for instructing an MF server to deliver a program stream is sent according to the program ID.

In step 304, the program stream delivered by the MF server is received.

In step 305, the program stream is played according to the range information of the part of image and the display mode information of the part of image.

The instruction message can include a session negotiation request message in the following fourth embodiment. The session negotiation request message includes transmission channel information of the program stream.

The program ID can be address information of the program.

According to the third embodiment of the present invention, the terminal of the recommendation receiver plays the program stream received from the MF server according to the range information of the part of image and the display mode information of the part of image, so as to achieve an objective of recommendation of important images in the program stream.

### Embodiment 4

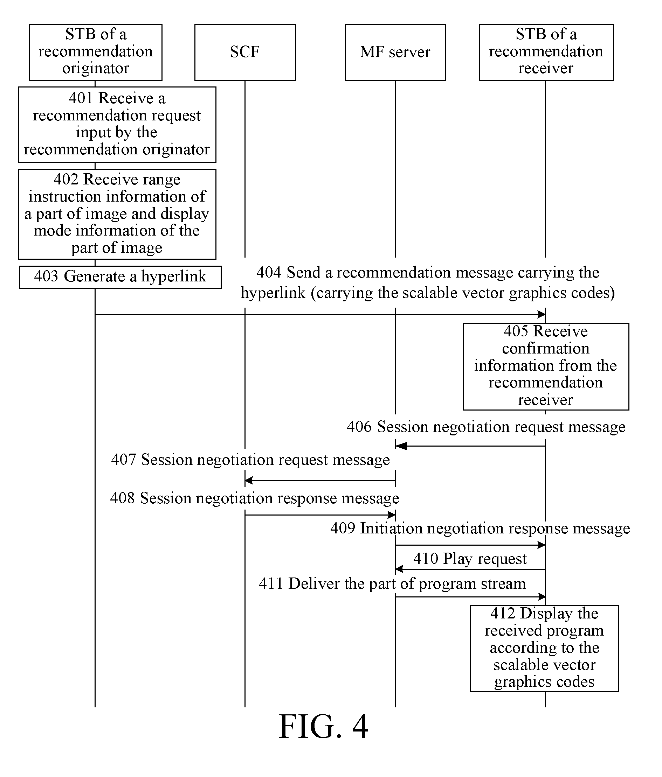

FIG 4 shows a program recommendation method according to a fourth embodiment of the present invention, which includes the following steps.

In step 401, an STB of a recommendation originator receives a recommendation request input by a recommendation originator and provides a recommendation operation interface for the recommendation originator.

The step is applicable in the following scenario. When the recommendation originator is watching a movie through the Internet protocol television (IPTV), the recommendation originator saw a goof suddenly. When two characters are quarrelling at the tenth minute, a stool is placed at an upper left corner in a long shot. When the two characters are still quarrelling at the twelfth minute, a bicycle is placed at the upper left corner in a long shot instead. The recommendation originator intends to recommend the program clip including the goof to a friend (a recommendation receiver). The recommendation originator selects a "recommend" button in the menu with a remote controller. At this time, the STB of the recommendation originator receives a recommendation request of the recommendation originator and displays a recommendation operation interface.

In step 402, the STB of the recommendation originator receives a recommendation condition inputted by the recommendation originator at the operation interface and receives information of the recommendation receiver. The recommendation conditions include recommendation instruction information of the part of image, range instruction information of the part of image, time range instruction information, and display mode instruction information of the part of image.

Continuing with the foregoing example, the STB of the recommendation originator can receive the recommendation conditions inputted by the recommendation originator at the operation interface in the following mode. For example, in the form of the drop-down menu in the recommendation operation interface, the recommendation originator selects a "recommend a part of image only" item in the drop-down menu and selects a range of the part of image in a sub-menu in the recommendation operation interface. It is assumed that the sub-menu in the recommendation operation interface provides options of "lower-left 1/3 of screen, lower-right 1/3 of screen, upper-left 1/3 of screen, and upper-right 1/3 of screen". The recommendation originator selects one (for example, lower-left 1/3 of screen) from the several options and selects a display mode of the part of image in the sub-menu in the recommendation operation interface. It is assumed that the sub-menu in the recommendation operation interface provides options such as "highlight display" and "highlight ring display". The recommendation originator selects one display mode (for example, highlight display). The recommendation originator inputs a time range "10 minutes to 12 minutes" in the sub-menu in the operation interface and selects a recommendation object (a recommendation receiver) in the friend list. At this time, the STB of the recommendation originator receives the recommendation instruction information of the part of image, the range instruction information of the part of image (the range of the part of image is lower-left 1/3 of screen), the time period instruction information (the time period is 10 minutes to 12 minutes), and the display mode instruction information of the part of image (the part of image is displayed in a highlight mode) input by the recommendation originator at the operation interface.

The sub-menu that provides the display mode options of the part of image can also include options of slow play and fast play. The recommendation originator can select the option of slow play, so that the terminal of the recommendation receiver plays the program stream within the time range at a low speed, such that the recommendation receiver can notice the foregoing goof.

In step 403, the STB of the recommendation originator generates scalable vector graphics (SVG) codes according to the display mode instruction information of the part of image and the range instruction information of the part of image in the recommendation conditions, and generates a hyperlink according to the time period instruction information and the SVG codes. A form of the hyperlink can be as follows.
IPTV://CoDServer/movie1/ep22? begin=" 10:00"&end=" 11:00" & SVG="..".

The part IPTV://CoDServer/movie1/ep22 is a demand address of the program.

The begin=" 10:00"&end=" 12:00" identifies that only the portion from the tenth minute to the twelfth minute is recommended.

The SVG="..." means the range of the part of image of the program and the display mode information of the part of image.

In step 404, the STB of the recommendation originator sends the recommendation message carrying the hyperlink to the STB of the recommendation receiver. The recommendation message can be an SIP message. A format of the SIP message can be as follows:
MESSAGE sip:xiaoxue@domain.com SIP/2.0
Via: SIP/2.0/TCP Potianpc.domain.com;branch=z9hG4bK776sgdkse
Max-Forwards: 70
From: sip:Potian@domain.com;tag=49583
To: sip:xiaoxue@domain.com
Call-ID: asd88asd77a@1.2.3.4
CSeq: 1 MESSAGE
Content-Type: text/plain ; application-type= content sharing
Content-Length: 50
IPTV://CoDServer/movie1/ep22? begin=" 10:00"&end=" 12:00" & SVG="... ".

In step 405, after receiving the recommendation message, the STB of the recommendation receiver prompts the recommendation message to the recommendation receiver. For example, the recommendation receiver can be prompted that "Your friend ** recommends a program to you. Receive it or not?" and the SVG="..." portion in the message is saved. The STB of the recommendation receiver receives the confirmation operation of the prompt from the recommendation receiver.

In step 406, the STB of the recommendation receiver initiates a session negotiation request message including transmission channel information of a program stream to an SCF according to the recommendation message.

In step 407, the SCF sends the session negotiation request message to the MF.

In step 408, after receiving the session negotiation request message, the MF sends the session negotiation response message to the SCF.

In step 409, the SCF sends the session negotiation response message to the STB of the recommendation receiver.

In step 410, the STB of the recommendation receiver sends a play request to the MF. The playing request carries the time range instruction information.

In step 411, the MF server delivers the program stream corresponding the time period to the STB of the recommendation receiver.

In step 412, the STB of the recommendation receiver displays the received program according to the SVG codes.

In step 412, if the SVG=" ... means highlight within the range of the part of image, in step 412, the STB of the recommendation receiver displays the part of image in the received program in a highlight mode according to the SVG="... ".

According to the fourth embodiment of the present invention, the recommendation message sent to the STB of the recommendation receiver by the STB of the recommendation originator carries the time period instruction information and the SVG codes (including the range information of the part of image and the display mode information of the part of image). The STB of the recommendation receiver displays the part of image of the program stream received from the MF server according to the SVG codes, so as to realize recommendation of important images in the program stream.

### Embodiment 5

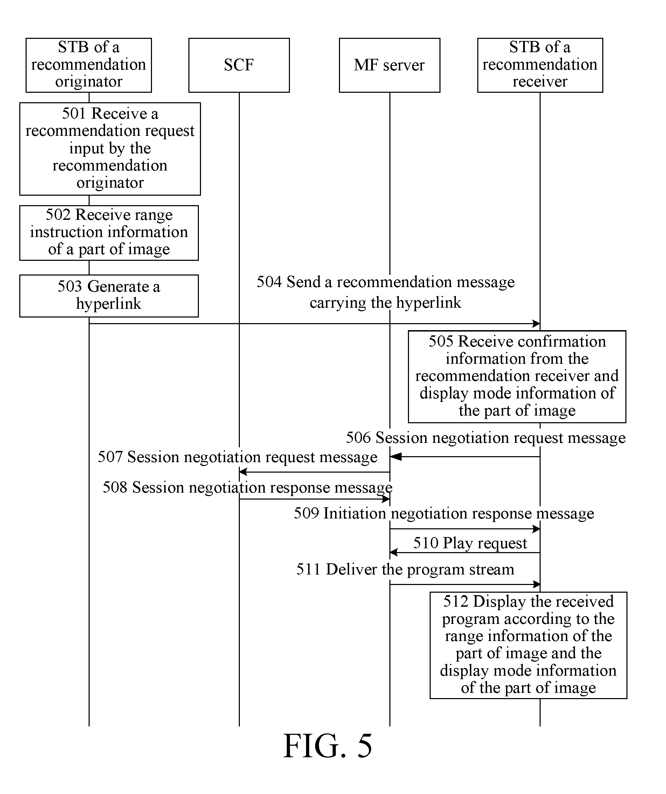

FIG 5 shows a program recommendation method according to of a fifth embodiment of the present invention, which includes the following steps.

In step 501, an STB of a recommendation originator receives a recommendation request input by a recommendation originator and provides a recommendation operation interface for the recommendation originator.

In step 502, the STB of the recommendation originator receives recommendation conditions input by the recommendation originator at the operation interface and receives the recommendation receiver information. The recommendation conditions include recommendation instruction information of a part of image, range instruction information of the part of image, and time period instruction information.

In step 503, the STB of the recommendation originator generates a hyperlink according to the time period instruction information and the range instruction information of the part of image.

In step 504, the STB of the recommendation originator sends a recommendation message carrying the hyperlink to the STB of the recommendation receiver.

In step 505, the STB of the recommendation receiver determines that a part of image of the program stream needs to be specifically displayed according to the range information of the part of image in the recommendation message and prompts the recommendation message to the recommendation originator. For example, the recommendation receiver can be prompted that "Your friend ** recommends a program to you. Receive it or not?". After receiving confirmation information to the prompt from the recommendation receiver, the STB of the recommendation receiver prompts the recommendation receiver to input the displaying mode information of the part of image and receives the display mode information of the part of image input by the recommendation receiver.

Steps 506 to 511 are similar to steps 406 to 411, the description of which is omitted here.

In step 512, the STB of the recommendation receiver displays the received program according to the range information of the part of image and the displaying mode information of the part of image.

In the embodiment, the recommendation receiver can also set the display mode information of the part of image in the STB in advance. In such a manner, in step 505, the STB of the recommendation receiver does not need to prompt the recommendation receiver to input the display mode information of the part of image.

According to the fifth embodiment of the present invention, the recommendation message sent to the STB of the recommendation receiver by the STB of the recommendation originator carries the time period instruction information and the range information of the part of image. The STB of the recommendation receiver displays the part of image of the program stream received from the MF server according to the range information of the part of image and the display mode information of the part of image determined by the recommendation receiver, so as to realize recommendation of important images in the program stream. The display mode information of the part of image determined by the recommendation receiver can be the display mode information of the part of image inputted by the recommendation receiver as prompted by the STB of the recommendation receiver or the display mode information of the part of image set by the recommendation receiver in advance.

### Embodiment 6

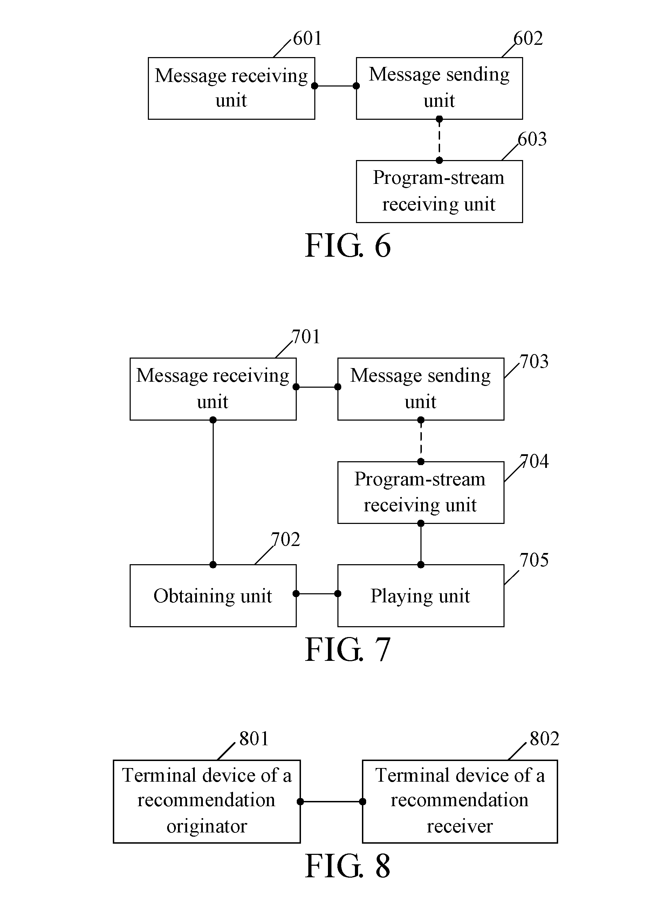

FIG 6 shows a terminal apparatus according to a sixth embodiment of the present invention, which includes a message receiving unit 601, a message sending unit 602, and a program-stream receiving unit 603.

The message receiving unit 601 is configured to receive a recommendation message. The recommendation message includes a program ID and an ID of a part of program stream recommended by a recommendation originator.

The message sending unit 602 is configured to send an instruction message for instructing an MF server to deliver the part of program stream of the program according to the program ID and the ID of the part of program stream.

The program-stream receiving unit 603 is configured to receive the part of program stream delivered by the MF server.

A logic connection relation exists between the message sending unit 602 and the program-stream receiving unit 603. That is to say, the program-stream receiving unit 603 receives the part of program stream delivered by the MF server after the message sending unit 602 sends the instruction message.

According to the sixth embodiment of the present invention, the terminal device instructs the MF server to only deliver a part of program stream according to the received ID of the part of program stream, so as to realize an objective of recommendation of a part of program stream. At the same time, as the MF server needs to only deliver a part of program stream, resource such as network bandwidth can be saved.

### Embodiment 7

FIG 7 shows a terminal device according to a seventh embodiment of the present invention, which includes a message receiving unit 701, an obtaining unit 702, a message sending unit 703, a program-stream receiving unit 704, and a playing unit 705.

The message receiving unit 701 is configured to receive a recommendation message. The recommendation message includes a program ID and range information of a part of image recommended by a recommendation originator.

The obtaining unit 702 is configured to obtain display mode information of the part of image after receiving the recommendation message.

The message sending unit 703 is configured to send an instruction message for instructing an MF server to deliver a program stream according to the program ID.

The program-stream receiving unit 704 is configured to receive the program stream delivered by the MF server.

The playing unit 705 is configured to play the program stream according to the range information of the part of image and the display mode information of the part of image.

The obtaining unit 702 is specifically configured to obtain the display mode information of the part of image from the recommendation message, or the obtaining unit 702 is specifically configured to receive the display mode information of the part of image determined by the recommendation receiver.

A logic connection relation exists between the message sending unit 703 and the program-stream receiving unit 704. That is to say, the program-stream receiving unit 704 receives the program stream delivered by the MF server after the message sending unit 703 sends the instruction message.

According to the seventh embodiment of the present invention, the terminal device plays the program stream received from the MF server according to the range information of the part of image and the display mode information of the part of image, so as to realize an objective of recommendation of important images in the program stream.

### Embodiment 8

FIG 8 shows a network system according to an eighth embodiment of the present invention, which includes a terminal of a recommendation originator 801 and a terminal of a recommendation receiver 802.

The terminal of the recommendation originator 801 is configured to receive a recommendation condition including recommendation instruction information of a part of program stream, generate a recommendation message according to the recommendation condition, and send the recommendation message to the terminal of the recommendation receiver 802. The recommendation message includes a program ID and an ID of the part of program stream recommended by the recommendation originator.

The terminal of the recommendation receiver 802 is configured to receive the recommendation message sent by the terminal of the recommendation originator 801, send an instruction message for instructing an MF server to deliver the part of program stream of the program according to the program ID and the ID of the part of program stream, and receive the part of program stream delivered by the MF server.

The terminal of the recommendation originator can be an STB of the recommendation originator. The terminal of the recommendation receiver can be an STB of the recommendation receiver.

According to the eighth embodiment of the present invention, the STB of the recommendation originator sends the ID of the part of program stream to the STB of the recommendation receiver. The STB of the recommendation receiver instructs the MF server to deliver only the part of program stream through the ID of the part of program stream, so as to realize an objective of recommendation of the part of program stream. At the same time, as the MF server needs to deliver only the part of program stream, resource such as network bandwidth can be saved.

### Embodiment 9

A network system according to a ninth embodiment of the present invention includes a terminal of a recommendation originator and a terminal of a recommendation receiver. A schematic view of connection between the terminal of the recommendation originator and the terminal of the recommendation receiver is the same as in FIG 8.

The terminal of the recommendation originator is configured to receive a recommendation condition including range instruction information of a part of image, generate a recommendation message according to the recommendation condition, and send the recommendation message to the terminal of the recommendation receiver. The recommendation message includes a program ID and range information of the part of image recommended by the recommendation originator.

The terminal of the recommendation receiver is configured to receive the recommendation message sent by the terminal of the recommendation originator, obtain display mode information of the part of image, send an instruction message for instructing an MF server to deliver a program stream according to the program ID, receive the program stream delivered by the MF server, and play the program stream according to the range information of the part of image and the display mode information of the part of image.

The terminal of the recommendation originator can be an STB of the recommendation originator. The terminal of the recommendation receiver can be an STB of the recommendation receiver.

According to the ninth embodiment of the present invention, the terminal of the recommendation receiver plays the program stream received from the MF server according to the range information of the part of image and the display mode information of the part of image, so as to realize an obj ective of recommendation of important images in the program stream.

Persons of ordinary skill in the art may understand that all or a part of the steps of the method according to the embodiments of the present invention may be implemented by a program instructing relevant hardware. The program may be stored in a computer readable storage medium, such as a Read-Only Memory (ROM), a magnetic disk or a Compact Disk Read-Only Memory (CD-ROM).

The program recommendation method, the terminal device, and the network system according to the embodiments of the present invention are described in detail in the foregoing. The principle and implementation of the present invention are described herein through specific examples. The description about the embodiments of the present invention is merely provided for ease of understanding of the method and core ideas of the present invention. Those of ordinary skill in the art can make variations and modifications to the present invention in terms of the specific implementations and application scopes according to the ideas of the present invention. Therefore, the specification shall not be construed as limitations to the present invention.

## Claims

1. A program recommendation method, comprising:
receiving, by a terminal of a recommendation receiver, a recommendation message sent by a terminal of a recommendation originator, wherein the recommendation message comprises a program identity (ID) and an ID of a part of program stream recommended by the recommendation originator;
sending an instruction message for instructing a media function (MF) server to deliver the part of program stream of the program according to the program ID and the ID of the part of program stream; and
receiving the part of program stream delivered by the MF server.

2. The method according to claim 1, further comprising:
receiving, by the terminal of the recommendation originator, a recommendation condition comprising recommendation instruction information of the part of program stream, and generating the recommendation message according to the recommendation condition.

3. A program recommendation method, comprising:
receiving, by a terminal of a recommendation receiver, a recommendation message sent by a terminal of a recommendation originator, wherein the recommendation message comprises a program identity (ID) and range information of a part of image recommended by the recommendation originator;
obtaining display mode information of the part of image;
sending an instruction message for instructing a media function (MF) server to deliver a program stream according to the program ID; and
receiving the program stream delivered by the MF server, and playing the program stream according to the range information of the part of image and the display mode information of the part of image.

4. The method according to claim 3, wherein
the recommendation message further comprises the display mode information of the part of image; and
the obtaining the display mode information of the part of image is specifically:
obtaining the display mode information of the part of image from the recommendation message.

5. The method according to claim 3, wherein the obtaining the display mode information of the part of image is specifically:
receiving, by the terminal of the recommendation receiver, the display mode information of the part of image determined by the recommendation receiver.

6. The method according to claim 3, 4 or 5, further comprising:
receiving, by the terminal of the recommendation originator, a recommendation condition comprising range instruction information of the part of image, and generating the recommendation message according to the recommendation condition.

7. A terminal device, comprising:
a message receiving unit, configured to receive a recommendation message comprising a program identity (ID) and an ID of a part of program stream recommended by a recommendation originator;
a message sending unit, configured to send an instruction message for instructing a media function (MF) server to deliver the part of program stream of the program according to the program ID and the ID of the part of program stream; and
a program-stream receiving unit, configured to receive the part of program stream delivered by the MF server.

8. A terminal device, comprising:
a message receiving unit, configured to receive a recommendation message comprising a program identity (ID) and range information of a part of image recommended by a recommendation originator;
an obtaining unit, configured to obtain display mode information of the part of image after receiving the recommendation message;
a message sending unit, configured to send an instruction message for instructing a media function (MF) server to deliver a program stream according to the program ID;
a program-stream receiving unit, configured to receive the program stream delivered by the MF server;
a playing unit, configured to play the program stream according to the range information of the part of image and the display mode information of the part of image.

9. The terminal device according to claim 8, wherein
the obtaining unit is configured to obtain the display mode information of the part of image from the recommendation message.

10. The terminal device according to claim 8, wherein
the obtaining unit is configured to receive the display mode information of the part of image determined by a recommendation receiver.

11. A network system, comprising: a terminal of a recommendation originator and a terminal of a recommendation receiver, wherein
the terminal of the recommendation originator is configured to receive a recommendation condition comprising recommendation instruction information of a part of program stream, and send a recommendation message comprising an program identity (ID) and an ID of the part of program stream recommended by the recommendation originator to the terminal of the recommendation receiver according to the recommendation condition, and
the terminal of the recommendation receiver is configured to receive the recommendation message sent by the terminal of the recommendation originator, send an instruction message for instructing a media function (MF) server to deliver the part of program stream of the program according to the program ID and the ID of the part of program stream, and receive the part of program stream delivered by the MF server.

12. A network system, comprising: a terminal of a recommendation originator and a terminal of a recommendation receiver, wherein
the terminal of the recommendation originator is configured to receive a recommendation condition comprising range instruction information of a part of image, and send a recommendation message comprising a program identity (ID) and range information of the part of image recommended by the recommendation originator to the terminal of the recommendation receiver according to the recommendation condition, and
the terminal of the recommendation receiver is configured to receive the recommendation message sent by the terminal of the recommendation originator, obtain display mode information of the part of image, send an instruction message for instructing a media function (MF) server to deliver a program stream according to the program ID, receive the program stream delivered by the MF server, and play the program stream according to the range information of the part of image and the display mode information of the part of image.
